Europäisches Patentamt

European Patent Office

Office européen des brevets

(19)

(11) Publication number: **0 160 167**

**A1**

## (12) EUROPEAN PATENT APPLICATION

(21) Application number: **85101671.7**

(22) Date of filing: **15.02.85**

(51) Int. Cl.⁴: **G 05 B 19/04**

(30) Priority: **21.02.84 US 582168**

(43) Date of publication of application:
**06.11.85 Bulletin 85/45**

(84) Designated Contracting States:
**DE FR**

(71) Applicant: **DIDDE GRAPHIC SYSTEMS CORPORATION**
**P.O. Box 1088 1200 Graphic Arts Road**
**Emporia Kansas 66801(US)**

(72) Inventor: **Stroupe, David Ray**
**2519 Coronado Court**
**Emporia Kansas 66801(US)**

(74) Representative: **UEXKÜLL & STOLBERG Patentanwälte**
**Beselerstrasse 4**
**D-2000 Hamburg 52(DE)**

(54) **Method and apparatus for distributed electronic control of a printing press.**

(57) A printing press is provided having microprocessor-based central control apparatus which simplifies press construction and allows the operating conditions of the press to be quickly set-up, established from a previously prepared computer program or easily changed with a minimum of waste to achieve a high print quality. The microprocessor-based central control panel apparatus is capable of generating a digital signal having a unit address code, a function command code, and an operating value code which cooperate to direct operation of selected functions of the individual work units of the press (e.g. offset towers, roll stand, dryer, chill stand, sheeter, etc.). The individual work units each have a microprocessor-based control mechanism for controlling functions of the individual unit. The processors of the unit control mechanisms are all connected to the central control panel by a common communication bus to provide a processor to processor digital signal communication system. Thus, the central control commands an individual unit by sending coded digital signals on the communication bus which identifies one or more units and the functions of each to be performed. The digital signal communication system not only simpifies press construction by eliminating the large number of dedicated analog signal wires heretofore used in press controls, but also provides for quick press response to inputs into the central control panel. The control apparatus has numerous other advantages including expansion capability to accommodate additional press work units, precise monitoring of press operating conditions and production, and the capability to store press operating instructions for later use.

FIG. 5

## METHOD AND APPARATUS FOR DISTRIBUTED
## ELECTRONIC CONTROL OF A PRINTING PRESS

The microfiche appendix of the computer program listing of the preferred embodiment of the present invention is incorporated herein by reference and includes two microfiche and 191 frames.

Background of the Invention
### 1. Field of the Invention

This invention relates to a method and apparatus for controlling selected functions of a printing press in which certain of the individual printing press units have a digital processor control while a microprocessor-based central control mechanism directs operation of the individual work unit processors by sending coded digital signals thereto.

### 2. Description of the Prior Art

As those familiar with printing press construction and operation will readily acknowledge, controlling the operation of a printing press under varying conditions to produce a quality product can be complicated. For example, a typical perfecting web-fed printing press usually includes four or five offset printing towers, a roll stand, a dryer, a chill stand, and a sheeter or folder. Each of these individual work units may perform several operating functions which need to be varied and monitored according to job requirements. For press efficiency, it is desirable to provide some way of controlling the many press functions and operation from a single, central operating location with minimum start-up and without adversely affecting product quality.

Controlling such a press from a central location involves providing not only the necessary controls for operating the various press functions, but also instrumentation for monitoring the press functions as well. In the past, attempts to provide central control have been limited to analog controls for each individual press function and analog instrumentation for monitoring many of the particular press functions. It will be appreciated that such an analog, hardwired central control system involves a complex wiring scheme involving several hundred wires between the central control panel and the press. Further, changes to current press operating conditions requires careful operator attention.

For example, in such an analog, hardwired press, the operator might desire to change the amount of water delivered to the upper printing train of the second offset printing tower. To accomplish this, the operator would have to actuate a push button on the central control panel which in turn controls the voltage output of a potentiometer. The potentiometer output extends from the water motor control cabinet to the second offset to operate the upper water supply drive motor. A feedback mechanism is provided which supplies to a meter on the central control panel the relative speed of the water supply motor (typically 0 to 100%). Thus, if a water speed change is desired, the operator holds the applicable increase or decrease button down until the respective water speed meter indicates the desired reading. This procedure necessitates that the operator devote his attention to the water speed change operation until the desired water speed is obtained. In many cases, for example in initial setup, the operator time involved in obtaining the desired press response can require a great deal of time, particularly in a commercial press where many different functions necessitate specific setup or change from a prior condition. Additionally, typical hardwired water speed control assembly involves five wires running from the central control panel to the offset tower for just the upper water system. In a perfecting printing press having many functions on each individual work unit, the number of wires incorporated in such a hardwired system running from the central control to the press can approach several hundred. Such a elaborate wiring scheme is not only difficult to design and troubleshoot, but additionally is not easily changed to incorporate different work units or to add on additional work units.

### 3. Information Disclosure Statement

U.S. Patent No. 4,366,542, Anselrode, may be relevant to the present application. Anselrode discloses a method and apparatus for establishing the operating conditions of a printing press or the like by converting the press operating parameters into digital data which is stored in a retrievable recording medium. The operating parameter digital data is then read from the recording medium when it is desired to set up the printing press for a new job. That is, the individual work units of the printing press are set up in accordance with the previously used press operating parameters. Although Anselrode attempts to solve certain of the problems of press setup requiring constant operator attention, the system is particularly advantageous only if the next succeeding job has precisely the same operating parameters as the one before. Needless to say, this is an infrequent occurrence in most high quality multiple color commercial printing operations.

Furthermore, Anselrode relies upon conventional, analog, hardwired components to control the functions of the individual press work units. Such a hardwired system is of course undesirable in terms of complexity and cost, and also in the difficulty of modifying or expanding the press to incorporate different press work units.

Summary of the Invention

The deficiencies outlined above in connection with such past hardwired printing press control mechanisms are in large measure overcome by the electronic control method and apparatus of the present invention. Broadly speaking, the control apparatus hereof includes a microprocessor-based central control mechanism, a plurality of digital processors respectively coupled to individual press units, and a communications bus linking the unit processors and the central control. The central control mechanism operates to receive operator instructions and to output the instructions as digital signals on the communications bus to all of the unit processors. The digital signals include a unit address code and a function command code. Each unit address code generated is specific for one or more unit processors. Each unit processor reads the address code of the digital signal to determine if it is being addressed by the digital signal, and if it is addressed, reads the function command and operates accordingly.

This processor-to-processor communication system greatly simplifies and virtually eliminates the complex wiring of the press by allowing the central control mechanism to transmit a stream of digital signals to all of the work units, with the

0160167

-5-

individual unit processors deciding whether and in what manner to respond to a particular digital signal. In the preferred embodiment, a serial bus is used in which all of the unit processors are operatively connected to the same serial bus. Further, the communications bus preferably includes both a transmit cable supplying signals to the unit processors and a receiver cable for supplying information from the individual unit processors to the central control mechanism thereby providing continuous monitoring of the functions of the respective work units. Thus, information supplied from a unit processor over the receiver cable to the central control mechanism often triggers a press response without operator interface.

The method of the present invention for controlling the operation of the printing press involves inputting the operating instructions into the central control digital processor and outputting the operating instructions as digital signals. The operating instructions are indicative of the desired operation of the particular function or functions desired to be controlled by the particular units. Advantageously, the processor-to-processor communication scheme hereof allows one or more functions on several work units to be changed at the same time. The digital signals from the central processor are transmitted to all of the unit processors such that each unit processor determines whether the digital signals are addressing a particular unit. Once the digital signal is passed from the central control processor to the individual unit processors, the unit processors assume responsibility for performing the desired operating function, freeing the central control mechanism to perform other tasks.

The distributed electronic control of the present invention is advantageous in many respects over press controls heretofore used. That is, the operator has only to enter the desired value for a particular function into the appropriate input of central control mechanism with the operating instruction being preferably displayed in the form of a digital readout. Once the operating instruction is entered into the central control mechanism, the operator is free to perform other tasks or to monitor other functions. Further, the communications bus is quite simple when compared with the hardwired systems of past printing press controls. Thus, changing a particular press work unit or adding additional functions to a particular unit controlled by the unit processor is primarily a software change with little, if any, hardware modifications needed.

Brief Description of the Drawings

Figure 1 is a perspective view of a perfecting printing press which incorporates the control apparatus hereof;

Fig. 2 is a plan view of a preferred embodiment of a master keyboard of the central control mechanism of the present invention;

Fig. 3 is a plan view of the control keyboard coupled to each of the offset printing towers;

Fig. 4 is a schematic of the circuitry of the central control mechanism of the present invention; and

Fig. 5 is a schematic of an offset printing tower control circuitry.

## Description of the Preferred Embodiment

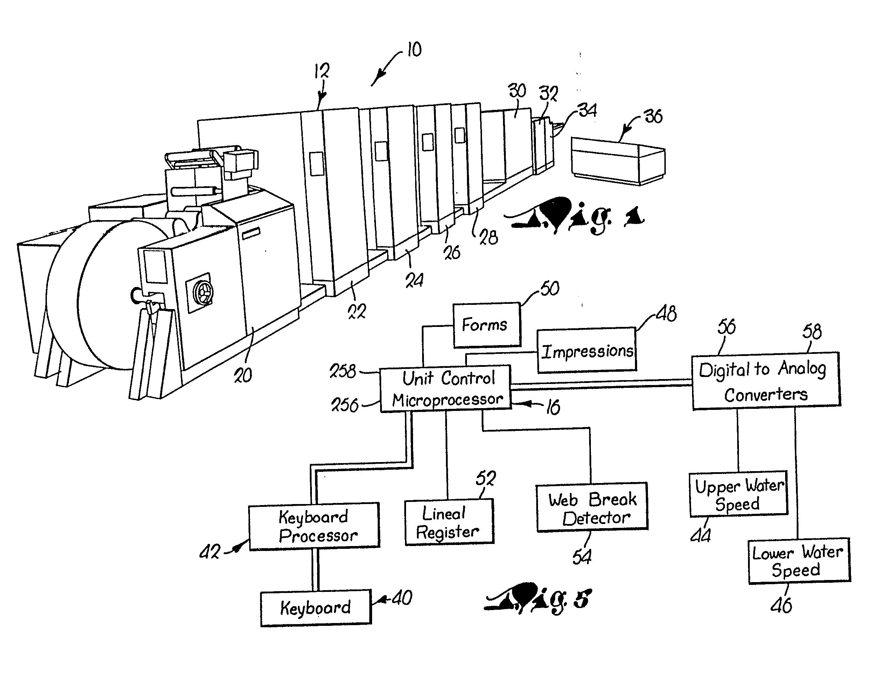

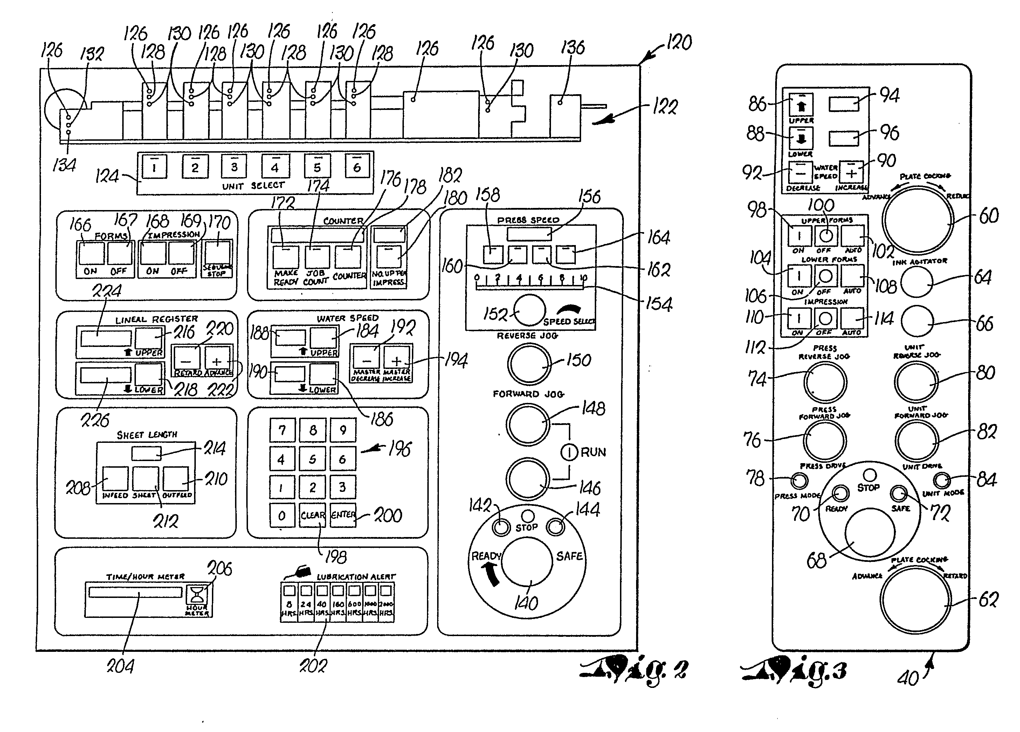

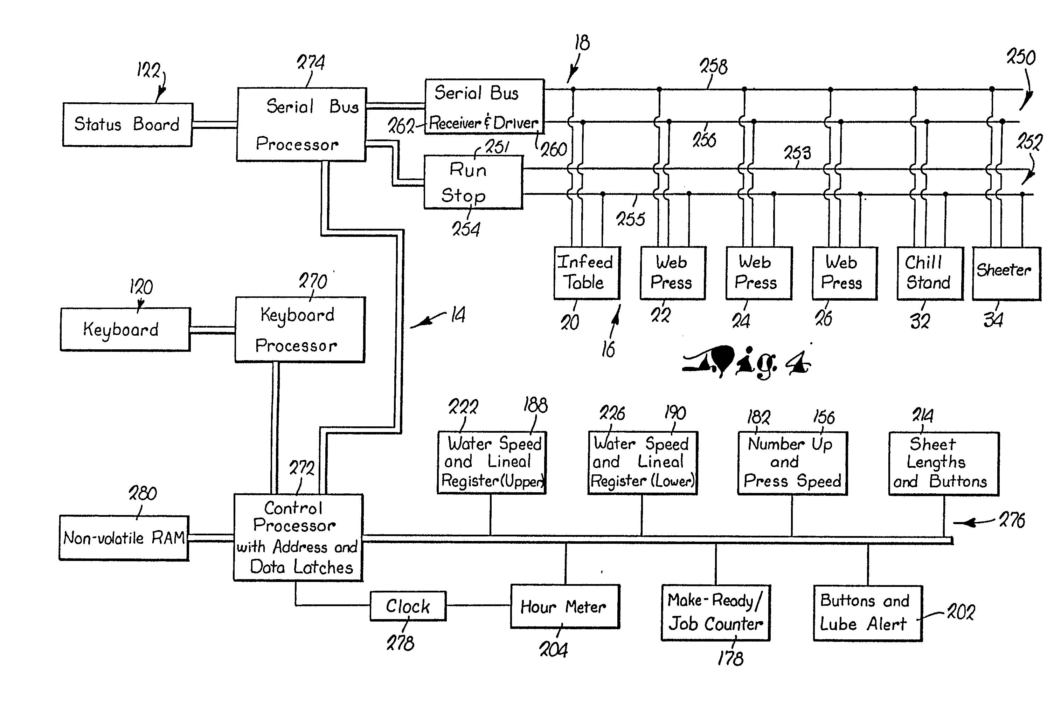

In the drawings, web-fed perfecting printing press 10 has a plurality of individual, modular work units 12, with the operation of the press 10 being controlled by the apparatus of the present invention. Broadly speaking, the apparatus of the present invention includes a central control mechanism 14 (Fig. 4), a plurality of digital processors 16 (Fig. 5) coupled to certain of the individual work units 12, and a bus means 18 for providing the communications link between the central control mechanism 14 and the unit processors 16 (see Fig. 4). Representative press 10 as illustrated includes a roll stand/infeed unit 20, four identical offset printing towers 22, 24, 26, 28, dryer 30, chill stand 32, sheeter 34, and an operator control station 36 (see Fig. 1).

The individual work units 12 of the press 10 include several conventional operating features. For example, the offset printing towers 22-28 and chill stand 32 incorporate web break detectors (not shown) therein and all of the units 12 include an emergency stop button and mechanism for quickly stopping operation of the press 10. Further, the offset towers 22-28 may include a bypass detector for sensing when the web has been routed around the particular tower, while the sheeter 34 conventionally includes a jam detector (not shown). Finally, the roll stand/infeed unit 20 may have an end-of-roll sensor as well as a splice detector for purposes which will be made clear.

The unit processors 16 are advantageously all of the same type and specifications, to facilitate interface, as well as reduce inventory requirements. The processors 16 are different only in that each recognizes a different address, to provide a specific signature for the respective unit 12 to which the processor 16 is coupled. In the preferred embodiment, the dryer 30 is not processor controlled, it being understood that a processor could be easily incorporated therewith. In practice, it has been found that best results are obtained utilizing unit processors 16 manufactured by the Intel Corporation of Mountainview, California and distributed under the designation of Model 8751. Those skilled in the art will appreciate that Model 8751 has an 8-bit CPU, on-chip oscillator, 4K bytes of EPROM and 128 bytes of RAM, as well as additional features. Advantageously, the 8751 has a five-source interrupt feature with two priority levels. Of course, many different types of equivalent microprocessors or microcomputers are equally adaptable for use in the present invention.

By way of example, Fig. 5 schematically depicts the control mechanism of an offset printing tower such as those designated by the numerals 22, 24, 26 and 28. In Fig. 5, the unit processor 16 receives inputs either from the communication bus 18 or alternatively from the offset keyboard 40 (see Figs. 5 and 3). If inputs are received directly from the keyboard 40 the inputs are fed first into a keyboard processor 42. Again, best results have been obtained using a keyboard processor 42 manufactured by the Intel Corporation, Model No. 8748. In any event, the inputs from the keyboard 40 are outputted from the keyboard processor 42 as a digital signal to the unit control processor 16. Regardless of whether the digital signal is received from the keyboard 40 or the communications bus 18, the control processor 16 in Fig. 5 has the capability of controlling the upper water speed 44, lower water speed 46, impression cylinder engage/disengage mechanism 48, form rollers on and off 50 (both ink and water), and circumferential or lineal registration 52 of the offset tower. Additionally, a web break detector 54 is provided and includes a means for providing a digital logic voltage to the unit processor 16 when a web break is detected. In this regard, an I/O module such as manufactured by the Heineman Electric Company of Trenton, New Jersey, Model No. IDC5 has proven especially useful to supply a logic voltage to the unit processor 16.

For controlling the upper or lower water speed in the perfecting press 10, the digital voltage from the processor 16 must be stepped up to run the respective water supply motor. To this end, a pair of digital-to-analog converters 56, 58 are provided to drive the respective upper and lower water speed motors. The impression cylinder control mechanism 48 and form roller control mechanism 50 employ appropriate I/O modules to operate the air cylinders for engaging or disengaging the ink and water form rollers 50 from the offset plate cylinder and the air cylinders controlling the impression cylinder locations.

The lineal register mechanism 52 is controlled in a slightly different manner by the unit processor 16. That is, if it is necessary to change lineal register, an AC synchronous motor is used to drive the cylinder through suitable gearing. Thus, the logic voltage of the processor 16 triggers an I/O module, which in turn provides AC current to the particular side of the phase shift network to give the desired direction of turn for the AC synchronous motor. Preferably, the motor is tied to a rotary encoder which gives one pulse for each .001 inch circumferential movement of the cylinder. On a command to adjust lineal register, AC voltage is applied to the synchronous motor and a counter is set by the processor 16 according to the desired amount of movement. As the cylinder moves, the rotary encoder provides a pulse to the counter, incrementing the counter until the desired movement of the cylinder is achieved. When the pulses from the rotary encoder zero out the counter, an interrupt stops the motor and the cylinder control mechanism maintains its register hold condition.

Turning to Fig. 3, the keyboard 40 of the offset printing towers 22, 24, 26, 28 is illustrated. By virtue of the fact that the offset towers 22 are for a perfecting press, features are duplicated for both upper and lower printing mechanisms. In more detail, the panel 40 includes plate cocking knobs 60, 62 and ink agitator controls 64, 66. An emergency stop button 68 is provided as well as ready light 70 and safe light 72. Advantageously, the offset towers 22 can be operated either from the main press drive or independently on a power source such as a 2-horsepower motor. Therefore, a press reverse jog switch 74 and press forward jog switch 76, as well as a press mode light 78 are provided. Similarly, unit reverse jog switch 80, unit forward jog switch 82 and unit mode light 84 are provided. This unit drive capability allows the operator to bypass the web around a particular tower, disable the main press driver to the tower, or to use the unit drive to perform maintenance on the tower assembly.

To control the water speed of the tower 22 from the keyboard 40, upper and lower water speed keys 86, 88 are provided as well as increase and decrease keys 90, 92. Further, an upper 7-segment LED 94 and lower 7-segment LED 96 are provided for monitoring the current relative water speed. The inputs from the keys 86-92 are provided to the keyboard processor 42 (see Fig. 5).

In similar fashion, the keyboard 40 presents control buttons for the form rollers and impression rollers, with the inputs provided to the keyboard processor 42. As shown in Fig. 3, the upper form rollers are controlled by an on key 98, off key 100, and an automatic mode key 102. The lower form rollers are controlled by on key 104, off key 106, and automatic key 108. Finally, the impression cylinders are controlled by on, off and auto keys 110, 112, and 114 respectively.

Turning to Fig. 2, the master control keyboard 120 is illustrated. The master keyboard 120 is mounted at the operating station 36 and provides the interface between the operator and the central control mechanism 14 as shown in Fig. 4. The top of the keyboard 120 presents a press silhouette status board 122 having six unit select keys 124 for selecting a particular offset tower for informational or operational purposes. The press silhouette 122 presents a series of lights on each of the units depicted thereon, which illuminate when particular conditions occur. That is, stop lights 126 illuminate to indicate to the operator which emergency stop button of the respective units 12 has been actuated. Light 128 illuminates when any of the offset towers are in the bypass mode. Light 130 illuminates when a web break is detected at the offset towers or the chill stand 32. The roll stand/infeed table silhouette presents an end-of-roll light 132 and a splice detector light 134. Finally, the sheeter silhouette has a jam light 136.

Turning to the right-hand side of Fig. 2, keyboard 120 presents a number of primarily analog-type switches. Emergency stop button 140 is similar to button 68 of panel 40, and includes ready light 142 and safe light 144. Immediately above the emergency stop button 140 is run switch 146 and forward jog switch 148. Advantageously, for the press to run, both the run switch 146 and forward jog switch 148 must be depressed simultaneously to prevent inadvertent actuation of the press 10. Immediately above the switch 148 is the reverse jog switch 150 and the rotatable speed select knob 152. Advantageously, the speed knob 152 controls a potentiometer which in turns regulates the rpm of the main press drive motor. Immediately above the speed knob 152 is a LED 154 which indicates press speed as a percentage of maximum speed. A 7-segment LED 156 reads press speed as a numerical value according to operator preference. That is, pressing key 158 gives press speed in feet per minute, key 160 in meters per minute, key 162 in impressions per hour, and key 164 in total per hour.

The remaining keys and displays in Fig. 2 are for the most part self-explanatory. The on/off form keys 166, 167 allow the operator to control the engagement of ink and water form rollers for all of the offset units 22, 24, 26, 28 that are in the automatic mode. The on/off impressions keys 168, 169 operate in a similar fashion. Finally, a sequence stop key 170 is provided.

The counter portion of the keyboard 120 presents a makeready key 172, job count key 174, and a counter key 176. Associated with the keys 172, 174, 176 is a 7-segment LED 178 which displays a count in accordance with the depression of the respective key. Adjacent the counter key 176 is a number up per impression key 180 and its associated number up LED 182. This allows the operator to specify to the total per hour meter how many images are made per impression cylinder rotation. For example, on a press with 17-1/2 inch plate, the operator might be printing two 8-inch images, or two images per impression.

The next set of keys on the keyboard 120 are the upper water speed 184, lower water speed 186, and their respective 7-segment LEDs 188, 190. Adjacent the keys 184, 186 are the master decrease and master increase keys 192, 194 respectively. Beneath the water speed are the numerical designations buttons 196 (0 through 9), clear key 198 and enter key 200.

The central, lowermost portion of Fig. 2 presents 7 bar dot LEDs 202 which illuminate according to the total number of operating hours on the press 10. The alert LEDs 202 illuminate when certain hour milestones for maintenance or lubrication requirements are met (ranging from 8 hours to 2,000 hours). The lube alert LEDs 202 remain illuminated for approximately 4 hours, in which time it is anticipated that the manufacturer's recommended maintenance can be performed. Adjacent the lube alert LEDs 202, is a time/hour LED 204 which normally displays real time. When the hour button 206 is depressed, the time LED 204 represents the total number of hours the press has been run.

Above the time/hour meter are infeed key 208, outfeed key 210 and sheet key 212. Associated with these keys is a sheet length 7-segment LED 214. Finally, a lineal register control is provided on the master keyboard 120. To this end, upper and lower register keys 216, 218 are provided, as well as retard and advance keys 220, 222. Associated with the lineal register control is an upper 7-segment LED 224 and a lower 7-segment LED 226.

Turning now to Fig. 4, the circuitry of the central control mechanism 14 and the communications bus 18 are illustrated schematically. Referring first to the communications bus 18, it is seen that the bus 18 broadly includes a serial bus 250 and run/stop lines 252. Generally speaking, the run/stop lines 252 include a run relay 251 connected to a run line 253 and a stop relay 254 connected to a stop line 255. The relays 251, 254 are respectively connected to the run enable mechanism on the main press drive (not shown) such that with the circuit closed, the main drive can run at a selectable operational speed. The run relay 251 and run keys 146, 148 are connected to the run line 253. The stop line 255 is a closed circuit to the stop mechanism of the main press drive. That is, the stop relay 254, the stop keys 68 on the individual units 12, and the stop key 140 are all in series on stop line 255 such that breaking the stop line 255 at any point stops the main press drive. Thus, an emergency press stop can be initiated by any of the stop keys 68, 140 or through the serial processor 274 by breaking stop relay 254.

It should be understood, that while in the preferred embodiment a serial bus is used to communicate between the central control mechanism 14 and the individual processors 16, a parallel bus arrangement works equally well under certain parameters without departing from the scope of the present invention. Further, as those skilled in the art will appreciate, the communication bus 18 could alternatively comprise a fiber optic cable assembly or even a wireless transmission system without departing from the spirit of the present invention. In more detail, the serial bus 250 of the preferred embodiment essentially comprises a transmit cable 256 and a receive cable 258. Each cable 256, 258 preferably includes a pair of wires constructed and arranged to provide a differential signal between the central control mechanism 14 and the individual unit processors 16 without extraneous noise which could produce harmful effects on the signals. Each individual work unit 12 has a differential receiver (not shown) which is coupled to the transmit cable 256, while the differential receiver of the units 12 supplies the signal to the respective unit processors 16. The feed end of the transmit cable 256 is connected to differential driver 260. In a similar fashion, each unit 12 presents a differential driver operatively coupled to the respective unit processor 16 which transmit a differential signal onto the two wires comprising the receive cable 258. Differential receiver 262 accepts the signal from the receive cable 258 and supplies the same to central control mechanism 14.

Turning to the circuitry of the central control mechanism 14, it will be appreciated that in the preferred embodiment three microprocessors are used. Keyboard 120 is essentially a conventional X-Y matrix with inputs received by the keyboard processor 270. Preferably, the keyboard processor 270 is a Model 8748, manufactured by the Intel Corporation. A digital signal in accordance with keyboard 120 inputs is supplied from keyboard processor 270 to the master control processor 272. Advantageously, the master processor 272 communicates with the third processor, serial bus processor 274. In the preferred embodiment, an Intel Model 8751 microcomputer is used for the master processor 272 as well as the serial bus processor 274.

The primary function of the serial bus processor 274 is to receive digital signals from the master processor 272 and to control the flow of information over the communications bus 18. Further, the serial bus processor 274 controls the stop lights 126, web break lights 130 and the other lights on the press silhouette status board 122 of the master keyboard 120.

Operatively connected to the master control processor 272 are seven display drivers 276 which are primarily dedicated to illuminating the 7-segment LEDs in the master keyboard 120 (see Fig. 2). Additionally, two of the display drivers 276 operate to illuminate the keys on the keyboard 120 when they are depressed. Further, the master control processor 272 is operatively connected to real time clock circuitry 278.

As depicted in Fig. 4, non-volatile RAM 280 is operatively connected to the master processor 272. Preferably, the non-volatile RAM 280 is a 256-byte electrically erasable PROM as manufactured by the XICOR Corporation of Milpitas, California, Model X2210. The non-volatile RAM 280 provides a convenient mechanism for storing certain press operating information on power down, without battery backup. To this end, a power down circuit (not shown) is coupled to the non-volatile RAM 280, such that when AC power is interrupted to the press 10, certain of the current press operating conditions are stored in the non-volatile RAM 280 for later use, if desired, on power up of the press 10.

## Operation

Broadly speaking, the present invention calls for providing a unit digital processor 16 for the individual work units 12, a microprocessor-based central control mechanism 14, and a communications bus between the central control mechanism 14 and individual processor 16. Essentially, a processor-to-processor communication system is established which allows a large amount of information to be passed between the individual work units 12 and the central control mechanism 14 in a short period of time. In the preferred embodiment, a 5-byte protocol is used to pass information along the serial bus 250 with appropriate buffers in each processor. The first byte in the communications protocol is a unit address code which identifies a particular unit processor 16 for a particular work unit 12. All of the unit processors 16 read the digital signal passed on the transmit cable 256 and if the address byte of the protocol identifies the unit, then the particular unit 12 reads the remaining four bytes of the protocol by transferring the same into a buffer location. However, if the address byte of the digital signal is not addressing the particular unit 12, then the remaining four bytes of information in the digital signal protocol are ignored. Preferably, the second byte is a command word or code and the remaining bytes present information if appropriate or are simply dummy bytes. A similar protocol is used when transferring information from the unit processor 16 to the central control mechanism 14.

The offset towers 22, 24, 26 and 28 can be individually controlled by inputting operating instructions directly into the respective offset keyboards 40. Alternatively, the entire press can be

-18-

controlled from the operator station 36 by inputting operating instructions into the master keyboard 120. In contrast with analog control systems used in the past, the keyboards 120 and 40 allow an operator to input an operating instruction for a particular function (e.g. water speed or lineal register) and then direct his attention to other matters without waiting for press response. Further, the LEDs associated with the keyboards 120, 40, provide an easily discernible instantaneous readout of the current operating condition of a particular press function. The press silhouette status board 122 provides a beneficial feature in providing the operator with an instantaneous feedback of a high priority press malfunction, such as a web break, emergency stop, jam, etc.

Turning now to the sequence of operation of the control apparatus of the present invention, it is to be understood that the computer program listing in the appended microfiche amplifies in some detail the preferred operation of the present invention and should be consulted. Broadly speaking, on press power up, the master control processor 272 enters a number of initializing routines, such as establishing the handshake circuitry between the processors 272, 274, checking the clock 278, reading information stored in the non-volatile RAM 280, and entering an interrupt enable routine.

On press power up, the serial bus processor 274 similarly commences a series of initialization routines. For example, the processor 274 enters routines to enable the stop and run lines, zeroes out memory and initializes the status display board 122. Certain interrupts are enabled, and the serial bus 250, driver 260 and receiver 262 are enabled.

0160167

-19-

After power up, a status poll program is executed which essentially checks all of the work units 12 (with the exception of the dryer 30 which does not have a processor 16) and stores the information received in memory for later use. Of particular importance in this status poll program is an update of the press silhouette status board 122 by determining the condition of the stop buttons 68, end-of-roll or splice detector on the roll stand 20, bypass conditions or web breaks on the offset towers, jam in the sheeter 34, etc. If the press status is normal, the silhouette status board 122 on the panel 120 so indicates, and the press 10 is now ready for normal operation.

In normal operation, the master control processor 272 responds to three types of interrupt: a press speed interrupt, a clock interrupt and a key interrupt. The press speed interrupt occurs approximately every thirty-two cycles of the oscillator and the clock interrupt occurs approximately every one-half second. The key interrupt only occurs when a key on the keyboard 120 is depressed. Thus, most of the time the master processor 272 cycles between the press speed interrupt routine and the clock interrupt routine, and infrequently enters the key interrupt routine.

Each time the master processor 272 receives a press speed interrupt, the average press speed is calculated. To this end, a Hall-effect sensor monitors the main press line shaft speed, with a frequency-to-voltage converter converting the pulses into a voltage. An analog-to-digital converter transforms this voltage into a digital value which is stored. Press speed is read eight times and averaged. With the average, the master processor 272 enters a calculation routine that calculates press speed in feet per minute, meters per minute, impressions per hour, and total per hour, and stores these calculations in dedicated RAM locations.

The primary functions of the clock interrupt are to obtain current operating information from a particular unit and to update the real time clock. When updating the real time clock, the routine also checks to see if press operating time matches one of the designated hour parameters on the lube alert 202. For example, if the press has been run for 40 hours, the 40-hour LED on the lube alert 202 is illuminated, and remains illuminated for approximately four hours.

The information request routine of the clock interrupt essentially obtains the current operating information for whatever unit is selected. Thus, the master control processor 272 provides a digital signal to the serial bus processor 274, the first byte being an unit address identification, and the second byte an information request command word. The command word of the digital signal sends the serial bus processor 274 into an information routine which begins sending previously stored information in this 5-byte protocol back to the master control processor 272. For example, if offset tower 24 is the unit selected, the first five bytes of information sent back might be the upper water speed for tower 24. The first byte would be the binary address code for tower 24, the second byte would be the command word or code designating the data as upper water motor speed, and the third byte would be binary value code of the actual water motor speed, and the fourth and fifth bytes would be empty. In similar fashion, the lower water speed, and upper and lower lineal register value codes are sent to the master control processor 272. The master control processor 272 receives this data and stores it in the data buffer allocated for the particular information. Once the information is received, the displays on the master keyboard 120 are updated.

The key interrupt occurs whenever the press operator depresses any of the keys on the master keyboard 120 (disregarding the essentially analog switches 140, 146, 148, 150, 152). The keyboard processor 270 continuously monitors the master keyboard 120 such that when a key is depressed, the master control processor 272 receives an interrupt. The keys on the master keyboard 120 are divided into four separate groups such that four different routines are entered depending upon which key is depressed.

The first group of keys are the unit select keys 124, the infeed key 208 and the outfeed key 210. When any of these keys are selected, the master control processor 272 sends a request for information command to the serial bus processor 274 similar to the request for information routine of the clock interrupt. That is, information relative to the particular key selected (designating a particular unit) is returned from the unit and displayed on the master keyboard 120. Once the information is supplied, the master processor returns to normal operation.

The second group of keys are the forms On/Off keys 166, 167, the impressions On/Off keys 168, 169 and the sequence stop key 170. When any of these keys are depressed, a special command is initiated from the serial bus processor 274 which includes a broadcast address as the first byte of the 5-byte protocol addressing all of the offset units.

All of the offset units respond to the digital signal if a broadcast address code is utilized. If the forms On key 166 is depressed, the first broadcast digital signal sent by the serial bus processor 274 commands all of the offset tower processors 16 to actuate the respective air cylinders to first put their water form rollers on. Serial bus processor 274 enables the timer, waits approximately four seconds and then sends another broadcast command to all of the unit control processors 16 to set their ink form rollers on. If the forms off key 167 had been depressed, the reverse process would have been initiated, that is ink forms off, four seconds allowed to lapse, and water forms off. The impression On/Off keys 168, 169 operate to engage or disengage the impression cylinders 48 in all of the offset towers.

The sequence stop key 170 causes the serial bus processor 274 to enter a similar routine. In the sequence stop routine, the ink form rollers of all of the offset towers are first disengaged, and following a four second delay, the water forms for all of the towers are disengaged from their respective plate cylinders. In the sequence stop routine, however, a twelve second delay is now allowed in which the impression cylinders remain in engagement with the paper web, to allow the blankets to clean to a certain degree. After twelve seconds, the impressions are disengaged, and serial processor 274 breaks the run and stop relays 251, 254 stopping the main press drive. It will be appreciated that when other than a twelve second delay is desired in which the impressions are allowed to remain in engagment with the web, the operator can simply press forms off key 167 and allow the press 10 to run the desired amount of time before depressing impressions off key 169.

The third group of keys allow numerical adjustments to the press 10 and consist of the counter keys 172, 174, 176, 180; the lineal register keys 216, 218, 220, 222; the water speed keys 184, 186, 192, 194; and the sheet key 212. Once any of these keys are depressed, the respective 7-segment LED will be set to zero and the master control processor 272 is ready for a value from the numerical keys 196. The appropriate numbers on the keys 196 are depressed, and if appropriate, the enter key 200 is depressed. The master control processor 272 enters the appropriate routine dependent upon which key is depressed and executes the command.

The fourth group of keys with a designated routine in the key interrupt function consists of the press speed keys 158, 160, 162, and 164 and the hour meter key 206. The hour meter key 206 simply switches the LED 204 from real time to a display of the number of hours the press has been operated in the run mode. As previously explained, the press speed interrupt has stored all the necessary press speed calculations in RAM, and the press speed keys simply display the desired data (feet per minute, meters per minute, etc.) through the medium of press speed LED 156 when depressed.

Examples

It will be appreciated that the control apparatus of the present invention performs many different functions in a short period of time and many examples exist. One example of the many control functions is the ability of the press 10 to automatically perform an emergency stop if conditions warrant such extreme action. Thus, if a web break is detected, an emergency stop of the press 10 is performed. For example, turning to Fig. 5, if the web break detector 54 senses a break in the web moving through the press 10, a signal is generated and converted to a digital signal commanding a priority input to the unit control processor 16. The unit processor 16 transmits an emergency stop signal over the receive cable 258 to the serial bus processor 274.

The serial bus processor 274 when receiving an emergency stop signal first intitiates a pair of signals to the run relay 251 and stop relay 254 breaking lines 253, 255 and stopping the main press drive assembly. Advantageously, the stop relay 254 is only momentarily disengaged, and then re-engaged. This condition, with the stop line 255 closed and the run line 253 broken, allows the operator to jog the press, but the press cannot run. The operator can jog the press either from the main keyboard 120 using jog buttons 148, 150 or at the individual units using the press jog switches 74, 76.

In addition to stopping the main press drive assembly, the serial bus processor 274 commands the offset towers 22, 24, 26, 28 to first remove their ink forms, then to remove the water forms, and finally to remove their impression cylinders. This entire operation occurs in less than two seconds. Further, the serial bus processor 274 initiates a signal on transmit cable 256 to all of the unit processors 16 to indicate a safe condition (illuminating safe light 72). Finally, if the emergency stop had been initiated as a result of a web break, processor 274 signals the silhouette status board 122 to illuminate the appropriate web break light 130 corresponding to the location of the web break.

If the emergency stop is initiated from one of the individual units 12, the particular stop button 68 simply, breaks stop line 255, stopping the press main drive. Concurrently, the button 68 activates a contact which provides a signal to the respective processor 16. In turn, the processor 16 signals the serial bus processor 274 that a stop has been initiated at a particular unit. The processor 274 illuminates the appropriate light 126 on status board 122 and command units 12 to illuminate their safe light 72.

In a similar manner, other types of press monitoring signals are generated to give the press operator information on the press silhouette status board 122 concerning malfunctions or abnormal conditions of the press 10. For example, jams in the sheeter 34 can be detected and displayed, and also the operation of one or more of the offset towers in the bypass mode. Of particular importance are the sensors which indicate to the operator the status of the roll stand/ infeed table 20. To this end, an end-of-roll sensor is provided and illuminates light 132 on the board 122 when the end-of-roll is sensed.

In an alternative embodiment of the present invention, an important feature is the splice detector on the roll stand/infeed table 20. As those skilled in the art will readily understand, a splice presents a greater thickness in the paper web in the area of the splice, which if passed through the press 10 can cause harmful effects, such as damage to the blankets in an offset tower. In the past, to pass a splice through the press 10, it was necessary to disengage the impression cylinders of all of the offset towers to pass the splice therethrough, and after splice passage, the impression cylinders would be brought back on line. This procedure necessitated relieving tension on the web moving through the press 10, causing startup problems, waste, registration problems, etc. In an alternative embodiment, the splice is detected at the roll stand/infeed table 20 and the signal generated by the splice detector sensor fed through the .serial communications bus 250 to the serial bus processor 274. Upon receiving the splice detection interrupt, the serial bus processor 274 enters a routine which sequentially commands impressions off in the individual offset towers to pass the splice through the press 10. With the impressions off in only one offset tower at a time, the web remains substantially under tension greatly reducing startup, waste, and registration problems, while preventing damage to the blankets.

Another example of the operation of the control apparatus of the preferred embodiment of the present invention is the process by which the press operator changes the water speed in one of the offset towers. First, the operator selects a particular tower, for example, the first offset tower 22, by pushing the appropriate unit select key 124 on the keyboard 120. As previously stated, pressing this key causes a key interrupt to the master control processor 272 (entering an information routine).

With Unit No. 1 selected on the keys 124, the water speed LEDs 188, 190 read the current operating values for the upper and lower water speeds of offset tower 22. When the upper water speed key 184 is depressed, another key interrupt routine is entered, the current values are stored in RAM on the processor 272, and the upper water speed LED 188

receives a command to indicate "00". Next, the operator depresses any of the numeric keys 196 to enter the proper value of upper water speed for offset tower 22. If the display is improper, the operator aborts the operation by pressing the clear key 198. If the display is proper, the enter key 200 is depressed which initiates the change.

While the press operator is entering this value, the master control processor 272 has entered the key interrupt routine for a water speed change as soon as the upper water speed key 184 was depressed. Using the 5-byte protocol, the master processor 272 has assigned to the first byte a binary value for the address of offset tower 22. The second byte of the buffer is a command word or code for change of upper water speed, the third byte is the numerical value code of the desired water speed. The fourth and fifth bytes in the 5-byte protocol for change of water speed are simply dummy bytes. After the master processor 272 outputs this information to the serial bus processor 274, the master processor 272 stores the information and returns to its normal operation between press speed interrupt and clock interrupt functions.

Serial bus processor 274 moves the information to a serial buffer and enters a transmit information routine in which the serial bus driver 260 transmits the digital signal over the serial cable 256. The unit that is addressed by the first byte of the protocol activates its differential receiver to receive the 5-byte digital signal. In this case, the processor 16 of offset tower 22 stores the digital information in an input buffer until it receives an end-of-message signal. The processor 16 uses the command word or code for the second byte of the protocol to determine what function is to be performed. That is, the command word is a pointer to a jump table that indicates what particular routine processor 16 is to execute. In the present example, processor 16 of offset tower 22 enters the upper water motor speed routine and stores the operating value code or third byte of the protocol. This routine commands the digital-to-analog converter 56 to use the operational value code as a proportional constant to output a voltage proportional to the maximum voltage of the water speed motor. Thus, the upper water speed motor 44 changes speed in accordance with the operating value sent thereto.

It will be appreciated that a change in lineal registration using the keys 216, 218, 220, 222 is similarly performed. However, as previously explained, the unit processor 16 upon receiving a digital signal over the serial cable 256 for change of lineal register, performs in a slightly different fashion. That is, the software routine for change of upper lineal register basically removes the register hold, initiates movement of the synchronous motor in the proper direction, and initializes a counter according to the operating value code received as part of the digital signal. As the cylinder moves, the rotary encoder creates pulses to the counter, essentially counting the pulses from movement of the cylinder. When the counter reaches zero, register hold is reinstated.

From the foregoing description, it will be appreciated that the control apparatus and method of the present invention is effective in quickly initiating change in the operating conditions of a printing press 10 and does so with far greater accuracy and efficiency than was practical or possible with past printing press controls. Using individual processors 16 on the work units 12 not only allows a very simple communications bus 18 to be used, but also provides rapid response to commands and provides a wealth of information to the press operator. Because of this relatively simple communications scheme, maintenance and troubleshooting operations are easily performed and the press can be readily updated if desired. The modular features of the printing press 10 readily allows new individual work units 12 to be added or functions added to existing work units. Changes in the press primarily constitute a change in software. For example, in the preferred embodiment the dryer 30 does not have a microprocessor control, but the existing hardware of the preferred embodiment allows a processor 16 to be easily incorporated therein. Thus, the flexibility and operation of the. control apparatus of the present invention offers a unique advance in the art.

Claims:

1. A method of controlling the operation of a printing press having a plurality of individual work units each of which has selectively controllable functions, said method comprising the steps of:

providing a central control digital processor which is capable of generating a digital signal having a unit address code, a function command code, and an operating value code;

providing a unit digital processor for each work unit to be controlled from the central processor and operable to control the operation of a respective work unit function in response to input of operating instructions thereto;

inputting operating instructions into said central processor which are indicative of a work unit or units and function or functions of each which are to be controlled, said central processor being operable upon input thereto of said operating instructions to output a digital signal which is specifically representative of the operating instruction inputted thereto;

transmitting said digital signal to all of said unit processors wherein each unit processor determines whether said unit address code of said digital signal is addressing the unit; and

operating said one or more units addressed by said unit address code in accordance with the function command code and operating value code.

2. A method as set forth in Claim 1; and including the step of storing some of said operating instructions in a non-volatile storage device.

3. A method as set forth in Claim 1, said operating step including the step of converting the value code of said digital signal received by said unit processors into an analog signal for performing a particular function of said work units.

4. A method as set forth in Claim 1, said operating step including the step of transmitting the value code of said digital signal received by said addressed unit processers to a counter for controlling the performance of a particular function of said work units.

5. A method as set forth in Claim 1; and including the steps of:
    storing current operaing conditions of an individual unit in the respective unit processor;
    transmitting certain of said operation conditions from one or more of said units to said central processor in response to a request for information therefrom.

6. A method for controlling the operation of a printing press having a plurality of individual work units and a central control digital processor, said method comprising the steps of:

  providing a unit digital processor for certain of said work units;

  outputting instructions from said central control digital processor as a digital signal specifically addressed for one or more of said unit processors;

  transmitting said digital signal to all of said unit processors, each unit processor determining whether said digital signal is addressing the unit; and

  operating said one or more unit processors in accordance with said digital signal.

7. A method as set forth in Claim 6; and including the step of inputting said instructions into said central processor indicative of the desired operation of one or more functions of one or more of said units.

8. A method as set forth in Claim 7; and including the step of converting said operating instructions into a digital signal having a unit address code, a function command code, and an operating value code.

9. A method as set forth in Claim 8, said operating step including the step of converting the value portion of said digital signal received by said unit processors into an analog signal for performing a particular function of said work units.

10. A method as set forth in Claim 6; and including the step of generating said instructions in said central processor according to a preset software routine.

11. A method as set forth in Claim 10, said instructions comprising a request for information concerning the status of one or more of said units, including the step of transmitting said requested information as a digital signal from said one or more units addressed to said central processor.

12. In a printing press having a plurality of individual work units, a control apparatus comprising:

central control means for receiving press operating instructions and for outputting the same as a digital signal having a unit address code;

a digital processor coupled to certain of said individual work units for controlling one or more functions of the respective work unit; and

bus means for communicating said digital signal between said central control means and each unit digital processor, each unit processor operable for determining whether it is addressed by said unit address code.

13. An apparatus as set forth in Claim 12, said bus means comprising a serial bus operatively connected to each unit digital processor.

14. An apparatus as set forth in Claim 12; and some of said units having one or more sensor means for determining a press operating condition and for indicating said condition to the respective unit processor.

15. An apparatus as set forth in Claim 14, said sensor means comprising a web break detector and said respective unit processor operable for transmitting a web break condition on said communication bus means to said central control means to alert the press operator.

16. An apparatus as set forth in Claim 12; and said central control means comprising:

a master keyboard mechanism for receiving instructions from the press operator,

a keyboard processor coupled to said keyboard for translating said instructions into a binary code,

a master processor coupled to said keyboard processor and programmed to operate in accordance with the digital signal received from said keyboard processor,

a bus processor coupled to said master processor operable for receiving instructions from said master processor and for outputting the same as a digital signal.

17. An apparatus as set forth in Claim 12, said bus means comprising a differential driver coupled to a pair of transmit wires and each unit processor having a differential receiver coupled to said transmit wires.

18. An apparatus as set forth in Claim 17, each unit processor having a differential driver, said bus means having a differential receiver and a pair of receive wires interconnecting said unit drivers and said bus receiver.

19. An apparatus as set forth in Claim 16, including a press status display board operatively connected to said bus processor for displaying current press operating condition information received from said bus processor.

20. An apparatus as set forth in Claim 12; and including means for storing some of the current press operating instructions in non-volatile memory.

21. An apparatus as set forth in Claim 12; certain of said work units having a control mechanism coupled thereto for inputting operating instructions for at least one of said functions of said unit into said respective unit processor.

22. An apparatus as set forth in Claim 16; and including real time clock circuitry operable for keeping real time and press operating time, said clock coupled to said keyboard for selectively indicating real time or press time.

23.    In a printing press having a plurality of offset printing towers, a control apparatus comprising:

central control means for receiving offset tower operating instructions and for outputting the same as a digital signal having a tower address code, a function command code, and an operating value code;

a digital processor operatively coupled to each of said offset towers;

each of said offset towers including means operatively connected to the respective processor for performing a particular function of the tower as directed by the respective processor; and

bus means for communicating said digital signal to all of said tower processors, said one or more tower processors addressed by said tower address code responding to said digital signal by directing said function means to perform the function specified in said function command code in accordance with said operating value code.

24.    An apparatus as set forth in Claim 23, said bus means comprising a serial bus having a transmit cable and a receive cable operatively connected to each tower processor.

25. An apparatus as set forth in Claim 23, said tower function performing means including a digital to analog converter and a water speed motor, said converter operable for receiving a signal from said tower processor representative of said operating value code and for supplying an analog voltage proportional to said signal to said water speed motor for operating the same.

26. An apparatus as set forth in Claim 23, said tower function means including means for controlling the lineal registration of a press offset tower.

27. An apparatus as set forth in Claim 23, said towers including water form rollers, ink form rollers and a plate cylinder, said tower function means including means for engaging and disengaging the plate cylinder with the ink and water form rollers.

28. An apparatus as set forth in Claim 27, said central control means operable in press startup operation to command said water form rollers to first engage said plate cylinder and said ink form rollers to engage said plate cylinder after said water form rollers.

29. An apparatus as set forth in Claim 23; and each of said offset units including a control panel means for inputting an operating instruction into said respective tower processor.

Fig. 1

Fig. 5

Fig. 3

Fig. 2

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 253 148 (JOHNSON) <br><br> * Whole document * <br><br> --- | 1,6,12,23 | G 05 B 19/04 |
| Y | US-A-4 365 297 (GRISHAM) <br><br> * Whole document * <br><br> --- | 1,6,12,23 | |
| Y | US-A-4 319 338 (GRUDOWSKI) <br><br> * Whole document * <br><br> --- | 1,6,12,23 | |
| Y | EP-A-0 071 352 (DANLY MACH. CORP.) <br> * Whole document * <br><br> --- | 1,6,12,23 | |
| A | US-A-3 942 158 (DUMMERMUTH) <br><br> --- | 1,6,12,23 | TECHNICAL FIELDS SEARCHED (Int. Cl.4) <br><br> G 05 B 19 <br> B 41 F 15 |
| D,A | US-A-4 366 542 (ANSELRODE) <br><br> ----- | 1,6,12,23 | |

The present search report has been drawn up for all claims

| Place of search | Date of completion of the search | Examiner |
|---|---|---|
| THE HAGUE | 26-06-1985 | RESSENAAR J.P. |